(19) Europäisches Patentamt
European Patent Office
Office européen des brevets

(11) Publication number: **0 119 704 A2**

(12) **EUROPEAN PATENT APPLICATION**

(21) Application number: **84300686.7**

(22) Date of filing: **03.02.84**

(51) Int. Cl.³: **E 21 B 43/25**, E 21 B 41/02

(30) Priority: **17.03.83 US 476003**

(43) Date of publication of application: **26.09.84 Bulletin 84/39**

(84) Designated Contracting States: **AT DE FR GB IT NL**

(71) Applicant: **HALLIBURTON COMPANY, P.O. Drawer 1431, Duncan Oklahoma 73536 (US)**

(72) Inventor: **Penny, Glenn Stanley, 2115 Westbriar, Duncan Oklahoma 73533 (US)**

(74) Representative: **Wain, Christopher Paul et al, A.A. THORNTON & CO. Northumberland House 303-306 High Holborn, London WC1V 7LE (GB)**

(54) **Method of enhancing the effectiveness of biocides.**

(57) A method of increasing the effectiveness of a biocide upon bateria, which comprises contacting said bacteria with a quantity of a biocide and an effective amount of at least one biocidal activity enhancing cationic perfluoro compound, said cationic perfluoro compound(s) being selected from the compounds represented by the formula:

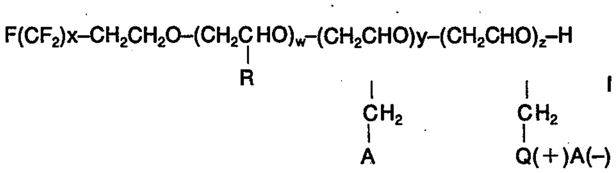

wherein x is an integer from 2 to 12 or an integer or fractional integer representing an average value of from 2 to 12; w and y are both individually integers from 0 to 20 or integers or fractional integers representing average values of from 0 to 20; z is an integer from 0 to 20 or an integer or fractional integer representing an average value of from 0 to 20, the sum of y and z being from 1 to 20; R is a hydrogen, methyl, ethyl or propyl radical; A is a halogen chosen from chlorine, bromine or iodine; and Q is a cationic nitrogen radical from the group consisting of an aromatic amino radical, a heterocyclic amino radical, and an amine radical represented by the formula:

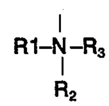

wherein $R_1$, $R_2$ and $R_3$ are from the group consisting of hydrocarbon radicals containing from 1 to 30 carbon atoms, aromatics hydrocarbon radicals such as phenyl and any alkyl substituted phenyl radical, and hydrogen radicals, provided that at least one of $R_1$ $R_2$ and $R_3$ is an aliphatic hydrocarbon radical containing from 1 to 30 carbon atoms or an aromatic hydrocarbon and that when any one $R_1$, $R_2$ and $R_3$ radicals contains more than four aliphatic carbon atoms or an aromatic hydrocarbon, the other two radicals are each chosen from the group consisting of hydrogen, methyl and ethyl radicals.

EP 0 119 704 A2

# METHOD OF ENHANCING THE EFFECTIVENESS OF BIOCIDES

The present invention relates to a method of enhancing the effectiveness of chemicals which show biocidal or bacteriostatic activity in the control of microbiological contamination.

The control of water quality is of prime importance in helping prevent subterranean formation damage during introduction of aqueous-based stimulation fluids. One of the parameters that can have a serious effect on water quality is microbial, that is, bacterial contamination.

Bacteria can contribute in several ways to formation damage. The injection of bacterial cells into oil field waters can result in formation permeability reduction of 90 to 95 percent. Bacteria can be responsible for the production of substantial quantities of particulate matter that can cause even more pronounced reductions in the permeability of porous media than the bacterial biomass alone. An example of particulate generation produced by bacterial corrosion is the oxidation of iron to ferrous ions which produces iron sulfide and iron carbonate in the presence of hydrogen sulfide and carbonate, respectively. Bacteria also can be a source of many corrosion problems in producing wells. Sulfate-reducing bacteria are a major source of hydrogen sulfide gas and can initiate corrosion or pitting of metal surfaces.

The direct effects of uncontrolled bacteria are readily seen in holding tanks containing biodegradable polymer solutions for such uses as polymer flooding operations and hydraulic fracturing treatments. Under suitable conditions of pH and temperature, the microbial population can multiply rapidly, utilizing the available polymer or other additives as a source of nutrition. In this event, the bacteria may alter the rheological properties of the viscous polymer solutions by fluid degradation and thereby alter the sweep efficiency of a polymer flood or the expected fracture geometry in a hydraulic fracturing treatment.

The effective control of microorganisms requires the application of a suitable biocide in an appropriate amount to a fluid having microbial contamination.

The surprising discovery now has been made that the use of a quantity of a cationic perfluoro compound as hereinafter described, which itself exhibits little bactericidal activity, together with a conventional biocide, results in a composition which is significantly more effective than the biocide alone. The use of the cationic perfluoro compound of the present invention together with a biocide permits a smaller quantity of biocide to be used

in the treatment of a microbial contamination while still maintaining the same relative level of effectiveness as a larger quantity of biocide.

According to the invention, there is provided a method of increasing the effectiveness of a biocide upon bacteria, which comprises contacting said bacteria with a quantity of a biocide and an effective amount of at least one biocidal activity enhancing cationic perfluoro compound, said cationic perfluoro compound(s) being selected from the compounds represented by the formula:

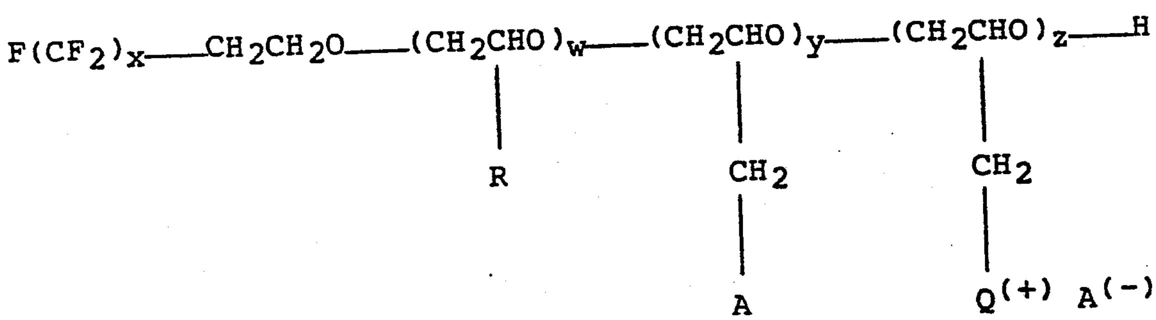

I

wherein x is an integer from 2 to 12 or an integer or fractional integer representing an average value of from 2 to 12; w and y are both individual integers from 0 to 20 or integers or fractional integers representing average values of from 0 to 20; z is an integer from 0 to 20 or an integer or fractional integer representing an average value of from 0 to 20, the sum of y and z being from 1 to 20; R is a hydrogen, methyl, ethyl or propyl radical; A is a halogen chosen from chlorine, bromine or iodine; and Q is a cationic nitrogen radical from the group consisting of an aromatic amino radical, a heterocyclic amino radical, and an amine radical represented by the formula:

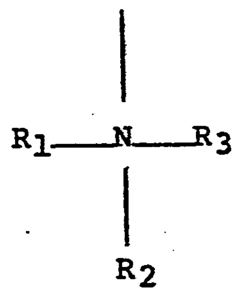

wherein $R_1$,$R_2$ and $R_3$ are from the group consisting of hydrocarbon radicals containing from 1 to 30 carbon atoms, aromatic hydrocarbon radicals such as phenyl and any alkyl substituted phenyl radical, and hydrogen radicals, provided that at least one of $R_1$,$R_2$ and $R_3$ is an aliphatic hydrocarbon radical containing from 1 to 30 carbon atoms or an aromatic hydrocarbon and that when any one of $R_1$,$R_2$ and $R_3$ radicals contains more than four aliphatic carbon atoms or an aromatic hydrocarbon, the other two radicals are each chosen from the group consisting of hydrogen, methyl and ethyl radicals.

The invention also provides a composition comprising a biocide and at least one biocidal-activity enhancing cationic perfluoro compound as defined above.

In the compounds of formula I, the halogen (a) may be present as either halo radical bonded to carbon or as an anion. The cationic nitrogen-containing radical Q is preferably selected from the group consisting of:

(i) an aromatic or heterocyclic amino radical formed from the following compounds: 2-H-pyrrole, pyrrole, imidazole, pyrazole, pyridine, pyrazine, pyrimidine, pyridazine, indolizine, isoindole, 3H-indole, indole, 1H-indazole, purine, 4H-quinolizine, quinoline, isoquinoline, phthalazine, naphthyridine, quinoxaline, quinazoline, 4-H-carbazole, carbazole, β-carboline, phenanthridine, acridine, phenathroline, phenazine, imidazolidine, phenoxazine, cinnoline, pyrrolidine, pyrroline, imidazoline, piperidine, piperzine, indoline, isoindoline, quinuclindine,

morpholine, azocine, azepine, 2H-azepine, 1,3,5-triazine, triazole, pteridine, dihydro-quinoline, hexamethylene imine, indazole; and

(ii) an amine radical represented by the formula:

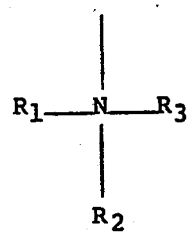

wherein $R_1$, $R_2$ and $R_3$ are from the group consisting of aliphatic hydrocarbon radicals containing from 1 to 30 carbon atoms, aromatic hydrocarbon radicals such as phenyl and any alkyl substituted phenyl radical, and hydrogen radicals, provided that at least one of $R_1$, $R_2$ and $R_3$ is an aliphatic hydrocarbon radical containing from 1 to 30 carbon atoms or an aromatic hydrocarbon, and that when any one of the $R_1$, $R_2$ and $R_3$ radicals contains more than four aliphatic carbon atoms or an aromatic hydrocarbon, the other two radicals are each chosen from the group consisting of hydrogen, methyl, and ethyl radicals.

In the above formula, x is preferably an integer of from 4 to 10 or an integer or fractional integer representing an average value of from 4 to 10; w is preferably an integer of from 0 to 12 or is an integer or fractional integer representing an average value of from 0 to 12; y is preferably 0; z is preferably

an integer of from 1 to 8 or an integer or fractional integer representing an average value of from 1 to 8; R is preferably chosen from the group consisting of hydrogen and methyl radicals, or mixtures thereof; A is preferably chlorine; and Q is preferably chosen from the group of cationic nitrogen-containing radicals formed by reacting trimethylamine, pyridine, quinoline, isoquinoline, N,N-dimethyl aniline, N-methyl morpholine, or morpholine with a chloro radical functional group.

Most preferably, in the above formula x is an integer of from 6 to 8 or an integer or fractional integer representing an average value of from 6 to 8; w is an integer of from 0 to 8 or an integer or fractional integer representing an average value of from 0 to 8; y is 0; z is an integer of from 1 to 4 or an integer or fractional integer representing an average value of from 1 to 4; R is from the group of hydrogen radicals and methyl radicals and/or mixtures thereof; A is chlorine; and Q is from the group of cationic nitrogen-containing radicals formed by reaction of trimethylamine, pyridine, quinoline, morpholine, and isoquinoline with a pendent chloro radical.

The term "integer or fractional integer representing an average value" indicates that, when two or more compounds are present, the average values of x, w, y and z can be any integer in the range given, such as 8 or a fractional integer such as 7.5, 7.8, 8.5 and the like.

A preferred group of nitrogen-containing cationic perfluoronated compounds for use in accordance with the methods

of this invention is represented by the following formula:

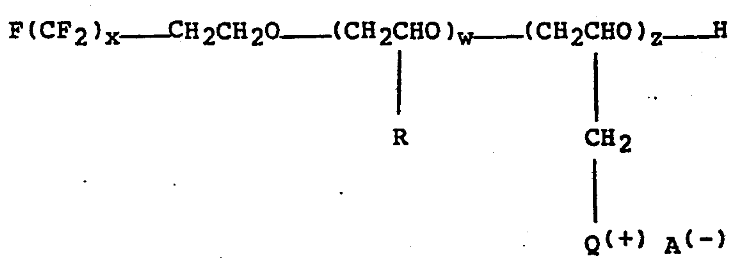

II

wherein x is an integer from 2 to 12 or an integer or fractional integer representing an average value of from 2 to 12; w is an integer from 1 to 20 or an integer or fractional integer representing an average value of from 1 to 20; z is an integer from 1 to 20 or a fractional integer representing an average value of from 1 to 20; R is from the group of hydrogen, methyl, ethyl, propyl radicals and mixtures thereof; A is a halogen anion from the group consisting of chlorine, bromine and iodine; and Q is a cationic nitrogen radical from the group consisting of an aromatic amino radical, a heterocyclic amino radical, and an amine radical represented by the formula:

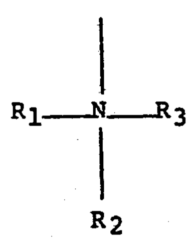

wherein: $R_1$, $R_2$ and $R_3$ are from the group consisting of hydrocarbon radicals containing from 1 to 30 carbon atoms, aromatic hydrocarbon radicals such as phenyl and any alkyl substituted phenyl radical, and hydrogen radicals, provided that at least one of $R_1$, $R_2$ and R3 is an aliphatic hydrocarbon radical containing from 1 to 30 carbon atoms or an aromatic hydrocarbon and that when any one of $R_1$, $R_2$ and $R_3$ radicals contains more than four aliphatic carbon atoms or an aromatic hydrocarbon, the other two radicals are each chosen from the group consisting of hydrogen, methyl and ethyl radicals.

Of this group of compounds, when Q is an aromatic/-heterocyclic amino radical, the most preferred compounds are those wherein x is an integer representing an average value of 8; w is an integer or fractional integer representing an average value of from 6 to 10; z is an integer or fractional integer representing an average value of from 1 to 3; R is methyl; and Q is a pyridino or quinolino radical.

When Q is an amine radical, the most preferred compounds are those wherein x is an integer representing an average value of 8; w is an integer or fractional integer representing an average value of from 6 to 8; z is an integer or fractional integer representing an average value of from 1 to 3; R is methyl; $R_1$, $R_2$ and $R_3$ are all methyl and A is chlorine.

Another preferred group of compounds are represented by the formula:

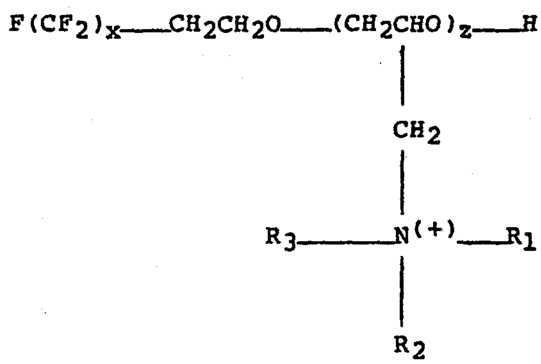

III

wherein x is an integer from 2 to 12 or an integer or fractional integer representing an average value of from 2 to 12; z is an integer from 1 to 20 or an integer or fractional integer representing an average value of from 1 to 20; $R_1$, $R_2$ and $R_3$ are each chosen from the group consisting of lower aliphatic hydrocarbon radicals containing from 1 to 4 carbon atoms; and A is a halogen anion chosen from the group consisting of chlorine, bromine and iodine.

Of this group of compounds, the most preferred is where x is an integer representing an average value of 8; z is an integer or fractional integer representing an average value of from 1 to 3; $R_1$, $R_2$ and $R_3$ are all methyl and A is chlorine.

Yet another preferred group of compounds for use in accordance with the methods of the present invention are represented by the formula:

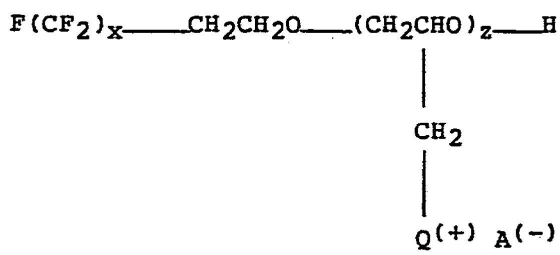

IV

wherein x is an integer from 2 to 12 or an integer or fractional integer representing an average value of from 2 to 12; z is an integer from 1 to 20 or an integer or fractional integer representing an average value of from 1 to 20; Q is a nitrogen-containing heterocyclic/aromatic cationic radical; and A is a halogen anion chosen from chlorine, bromine and iodine anions.

Of this group of compounds, the most preferred is where x is an integer representing an average value of 8; z is an integer representing an average value of from 1 to 3; Q is a pyridino or quinolino radical; and A is chlorine.

The most preferred compounds for use in accordance with the present invention are those represented by Formula II above wherein x is an integer representing an average value of 8; w is an integer or fractional integer representing an average value of from 6 to 8; z is an integer or fractional integer representing an value of 1 to 3; Q is an amine radical wherein $R_1$, $R_2$ and $R_3$ are all methyl; and A is chlorine.

The conventional biocides with which the cationic perfluoro compound or compounds of the present invention are

admixed can comprise any of those materials which exhibit biocidal activity and which do not adversely react with the cationic perfluoro compound. The biocide can comprise, for example, a bromine release agent, a formaldehyde release agent, a thiazoline formulation, a dithiocarbamate formulation, glutaraldehyde or the like.

In carrying out the methods of the present invention, the cationic perfluoro compound or compounds can be admixed with the biocide or with the aqueous fluid which is to be treated for bacterial contamination. The cationic perfluoro compound or compounds should be present in the aqueous fluid which is to be treated in an amount in excess of about 5 ppm. to enhance the effectiveness of the biocide. Preferably, the cationic perfluro compound or compounds of the present invention are present in an amount in the range of from about 10 to 100 ppm..

When it is desired to increase the rate at which bacterial contamination in an aqueous fluid will be destroyed, the biocide is used in conventional quantities in conjuction with the cationic perfluoro compound or compounds. When it is desired to maintain approximately the same relative level of biocide effectiveness, the quantity of biocide can be reduced from 25 to 50 percent or more from the amount conventionally used to control the bacterial contamination.

In order to facilitate a clear understanding of the methods of the present invention and not by way of limitation, the following Example is provided:

Example

To illustrate the effectiveness of the cationic perfluoro compounds of the present invention in enhancing bactericidal activity, the following tests were performed utilizing two commercially available biocides. The biocides comprised: a) N,N,N-trihydroxyethyltrihydro triazine and b) dibromonitrilopropionamide. A sample of contaminated water was prepared by admixing pseudomonas with the water in an amount sufficient to provide a concentration of $2 \times 10^6$ microorganisms per milliliter of water. Quantities of the biocides and cationic perfluoro compound then were admixed with samples of the contaminated water as indicated in Table I below:

TABLE I

| Test | Microorganisms per ml. | Biocide (a) 1./1000 1. Water | Biocide (b) 1./1000 1. Water | Cationic Perfluoro Compound 1./1000 1. Water |
|---|---|---|---|---|
| 1 | $2 \times 10^6$ | 0 | 0 | 0 |
| 2 | $2 \times 10^6$ | 0.25 | 0 | 0 |
| 3 | $2 \times 10^6$ | 0.25 | 0 | 1.5 |
| 4 | $2 \times 10^6$ | 0 | 0.1 | 0 |
| 5 | $2 \times 10^6$ | 0 | 0.1 | 1.5 |
| 6 | $2 \times 10^6$ | 0 | 0 | 1.5 |

The concentration of the microorganisms is determined by the use of ATP photometry. The concentration is determined based on the quantitative measurement of adenosine triphosphate (ATP) in the sample. ATP is a nucleotide found in all forms of life. Bacteria possess on the average $1 \times 10^{-15}$ gm of ATP per organism ($1 \times 10^{-9}$ micrograms ATP per organism). The concentration of organisms per ml. is determined by dividing the ATP concentration by $1 \times 10^{-9}$. To measure the ATP, the bacteria is contacted with a cell wall lysing agent to liberate the ATP. The released ATP then is reacted with the chemical luciferin in the presence of the enzyme luciferase, $Mg^{+2}$ and oxygen to produce light. A photometer is used to measure the amount of light which is expressed in relative light units. The relative light units are proportional to the amount of ATP in the sample. By reference to a standard curve of ATP concentration versus relative light units, the concentration of ATP and organisms per ml. can be determined (See Figure). For a further explanation of ATP photometry methods, see the article entitled "ATP Determination with Firefly Luciferase" by Leach, Franklin, J. Appl. Biochemistry, 3, 473-571 (1981), the entire disclosure of which is incorporated herein by reference. The results of measurements of the samples is set forth in Table II below:

TABLE II

Relative Light Units

| Test No. | Time (min.) 1 | 2 | 5 | 10 | 30 | 60 | 120 |
|---|---|---|---|---|---|---|---|
| 1 | 30 | 31 | 30 | 31 | 31 | 31 | 31 |
| 2 | 17 | 18 | 15 | 12 | 7.2 | 5.6 | 4.9 |
| 3 | 18 | 11.5 | 11 | 4.7 | 2.9 | 0.4 | 0 |
| 4 | 7.8 | 4.1 | 3.5 | 2.2 | 1.1 | 0.3 | 0.2 |
| 5 | 7.4 | 5.4 | 2.5 | 0.8 | 0 | 0 | 0 |
| 6 | 31 | 29 | 31 | 29 | 26 | 29 | 30 |

The quantity of organisms per milliliter is set forth in Table III below:

**TABLE III**

Organisms/ml.
Time (Minutes)

| Test | 1 | 2 | 5 | 10 | 30 | 60 | 120 |
|---|---|---|---|---|---|---|---|
| 1 | $2 \times 10^6$ | $2 \times 10^6$ | $2 \times 10^6$ | $2 \times 10^6$ | $2 \times 10^6$ | $2 \times 10^6$ | $2 \times 10^6$ |
| 2 | $1 \times 10^6$ | $1 \times 10^6$ | $8.5 \times 10^5$ | $6.2 \times 10^5$ | $4.0 \times 10^5$ | $3.2 \times 10^5$ | $2.0 \times 10^5$ |
| 3 | $1 \times 10^6$ | $6.2 \times 10^5$ | $6.0 \times 10^5$ | $2.4 \times 10^5$ | $1.6 \times 10^5$ | $2.4 \times 10^4$ | $<10^3$ |
| 4 | $4.4 \times 10^5$ | $2.4 \times 10^5$ | 2.0 x [illegible] | [illegible] $10^5$ | $6.0 \times 10^4$ | $1.8 \times 10^4$ | $1.0 \times 10^4$ |
| 5 | $4.2 \times 10^5$ | $3.0 \times 10^5$ | 1.4 [illegible] | [illegible] $10^5$ | $<10^3$ | $<10^3$ | $<10^3$ |
| 6 | $2 \times 10^6$ | $2 \times 10^6$ | 2 x [illegible] | [illegible] 6 | $2 \times 10^6$ | $2 \times 10^6$ | $2 \times 10^6$ |

The data clearly illustrates the beneficial effects of use of a quantity of the cationic perfluoro compounds of the present invention which exhibits little bactericidal activity together with a conventional biocide. The N,N,N-trihydroxyethyltrihydrotriazine, by itself, did not reduce the microorganism count to a level below $10^5$ organisms per ml. within two hours. However, when combined with the cationic perfluoro compounds of the present invention, the microorganism count was reduced to less than $10^3$ organisms per ml. within two hours. Similarly, the dibromonitriloproprionamide only reduced the microorganism count to $10^4$ organisms per ml. after two hours, but, in combination with the cationic perfluoro compound of the present invention, the microorganism count was reduced to less than $10^3$ organisms per ml. in less than 30 minutes.

CLAIMS:

1. A method of increasing the effectiveness of a biocide upon bacteria, which comprises contacting said bacteria with a quantity of a biocide and an effective amount of at least one biocidal activity enhancing cationic perfluoro compound, said cationic perfluoro compound(s) being selected from the compounds represented by the formula:

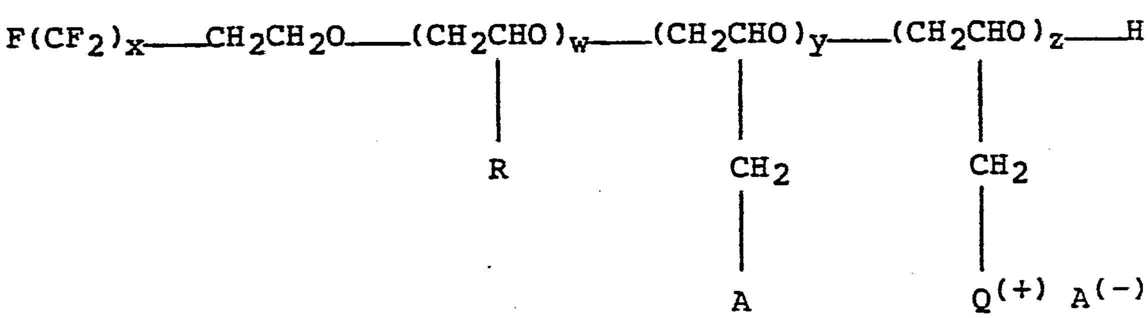

I

wherein x is an integer from 2 to 12 or an integer or fractional integer representing an average value of from 2 to 12; w and y are both individually integers from 0 to 20 or integers or fractional integers representing average values of from 0 to 20; z is an integer from 0 to 20 or an integer or fractional integer representing an average value of from 0 to 20, the sum of y and z being from 1 to 20; R is a hydrogen, methyl, ethyl or propyl radical; A is a halogen chosen from chlorine, bromine or iodine; and Q is a cationic nitrogen radical from the group consisting of an aromatic amino radical, a heterocyclic amino radical, and an amine radical represented by the formula:

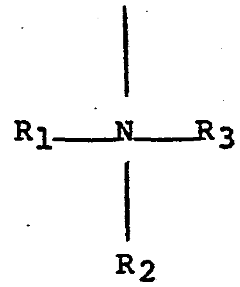

wherein $R_1$,$R_2$ and $R_3$ are from the group consisting of hydrocarbon radicals containing from 1 to 30 carbon atoms, aromatic hydrocarbon radicals such as phenyl and any alkyl substituted phenyl radical, and hydrogen radicals, provided that at least one of $R_1$,$R_2$ and $R_3$ is an aliphatic hydrocarbon radical containing from 1 to 30 carbon atoms or an aromatic hydrocarbon and that when any one of $R_1$,$R_2$ and $R_3$ radicals contains more than four aliphatic carbon atoms or an aromatic hydrocarbon, the other two radicals are each chosen from the group consisting of hydrogen, methyl and ethyl radicals.

2. A method according to claim 1, wherein said contacting of said bacteria with said cationic perfluoro compound(s) is brought about by dissolving or dispersing said compound or compounds in a carrier fluid and introducing said carrier fluid into contact with said bacteria.

3. A method according to claim 1 or 2, wherein x is from 4 to 10; w is from 0 to 12; y is 0; z is from 1 to 8; each R is hydrogen or methyl; A is chlorine; and Q is a trimethylamino, pyridino, quinolino, isoquinolino, N,N-dimethyl anilino, N-methyl morpholino or morpholino radical.

4. A method according to claim 1 or 2, wherein y is 0; w and z are not 0; and Q is an amine radical of formula II.

5. A method according to claim 4, wherein either: x is 8; w is from 6 to 10; z is from 1 to 3; R is a methyl radical; A is chlorine; and Q is a cationic pyridino or quinolino radical; or x is 8; w is from 6 to 8; z is from 1 to 3; A is chlorine; and Q is a trimethylamino radical.

6. A method according to claim 1 or 2, wherein w and y are both 0, Z is not 0; Q is an amine group of formula II in which $R_1$,$R_2$ and $R_3$ are each chosen from the group consisting of lower aliphatic hydrocarbon radicals containing from 1 to 4 carbon atoms.

7. A method according to claim 6, wherein x is 8; z is from 1 to 3; $R_1$,$R_2$ and $R_3$ are each methyl radicals; and A is a chlorine anion.

8. A method according to claim 1 or 2, wherein w and y are both 0; z is not 0; and Q is a nitrogen-containing heterocyclic or aromatic cationic radical.

9. A method according to claim 8, wherein x is 8; z is from 1 to 3; Q is a cationic pyrridino or quinolino radical; and A is a chlorine anion.

10. A method according to claim 4, wherein x is 8; w is from 6 to 8; z is from 1 to 3; Q is a trimethylamino radical; and A is a chlorine anion.

11. A composition which comprises a biocide and at least one biocidal-activity enhancing cationic perfluoro compound as defined in claim 1.

0119704



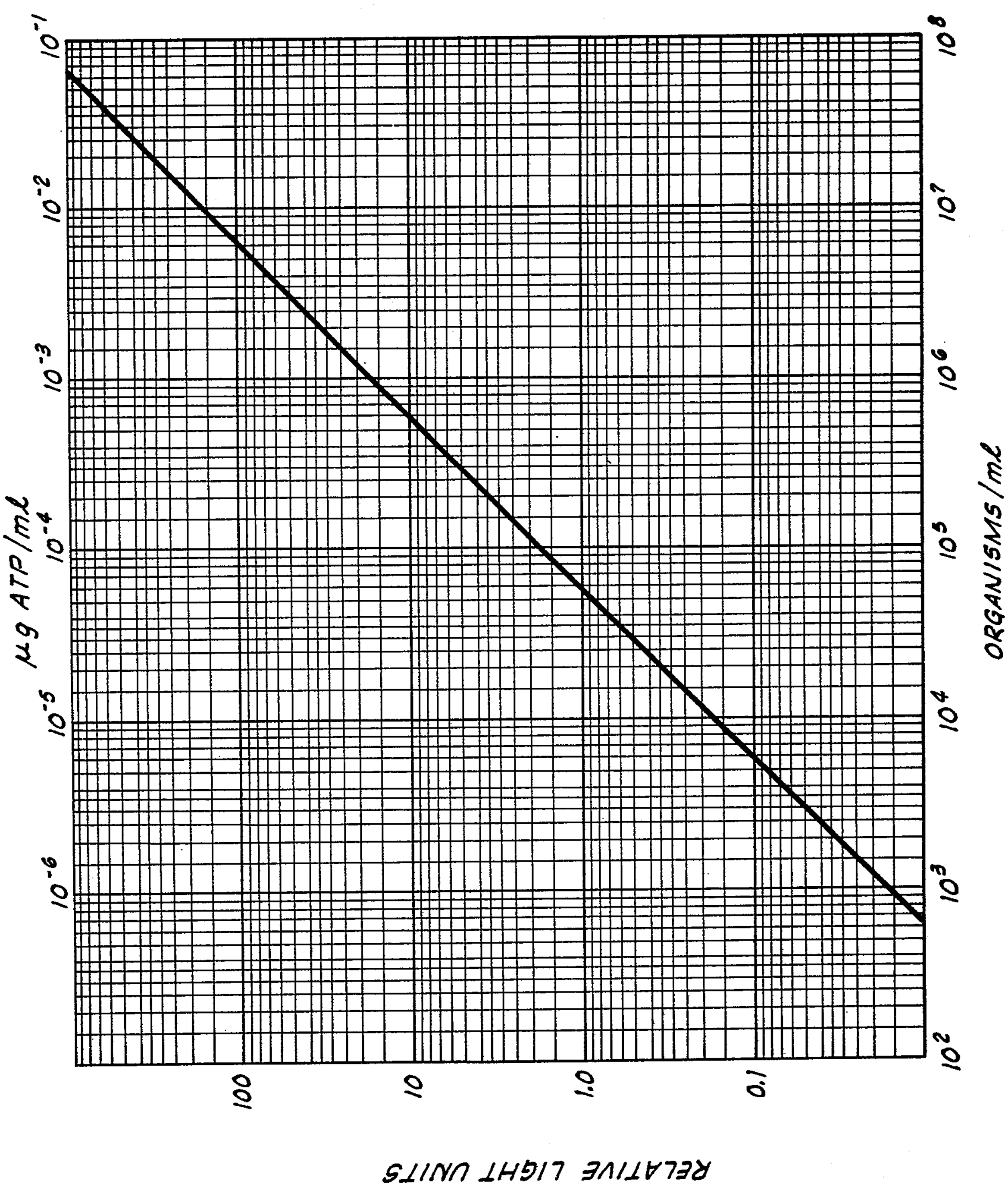


STANDARD CURVE